# EUROPEAN PATENT APPLICATION

(11) **EP 4 711 890 A1**
(43) Date of publication of application: **18.03.2026**
(21) Application number: 24832280.2
(22) Date of filing: 30.05.2024
(51) Int. Cl.: G06F 1/16, H04M 1/12, A45C 13/00, H04B 1/3888, A45C 11/00

(54) **ATTACHABLE/DETACHABLE DEVICE AND COUPLING STRUCTURE THEREOF**

(30) Priority: 30.06.2023 KR 20230084958; 08.08.2023 KR 20230103336
(71) Applicant: Samsung Electronics Co., Ltd., Suwon-si, Gyeonggi-do 16677 (KR)
(72) Inventor: HONG, Seungbo, Suwon-si Gyeonggi-do 16677 (KR)
(74) Representative: Appleyard Lees IP LLP
(86) International application number: PCT/KR2024/007358
(87) International publication number: WO 2025/005498

(57) **Abstract**

A device according to various embodiments may be configured to be attachable to and detachable from an external device. The device may comprise: a housing; at least one fastening member that fastens the housing to the external device by the rotation of the housing; at least one rotation prevention member that is inserted into an accommodation portion of the external device in a state in which the housing is fastened to the external device by the at least one fastening member; an operating member that moves in a first direction due to a force applied from the outside and has a first inclined surface formed at one end extending in the first direction; a first sliding member that includes a second inclined surface facing the first inclined surface and a third inclined surface inclined in the opposite direction as the second inclined surface, and slides in a second direction due to a force applied from the first inclined surface to the second inclined surface as the operating member moves in the first direction; and a connection member that includes a fourth inclined surface adjacent to the third inclined surface, moves in a third direction opposite the first direction as the first sliding member slides in the second direction, and is coupled to the at least one rotation prevention member.

## Description

### [Technical Field]

The present disclosure relates to a device that is attachable to and detachable from an external device and a coupling structure thereof.

### [Background Art]

In order to enhance the usability of a user device (e.g., a mobile device such as a smartphone, tablet PC, or multimedia playback device), an additional device may be mounted. For example, a protective case may be mounted on the user device to protect the user device, or an accessory device may be mounted on the user device or the protective case to assist a user in easily holding the user device.

The above-described information may be provided as related art for the purpose of assisting in understanding the disclosure. None of the above contents make an assertion or decision as to whether any of the above might be applicable as prior art with regard to the disclosure.

### [Disclosure of Invention]

### [Technical Problem]

In an embodiment, a device that is attachable to and detachable from an external device may include a housing, at least one fastening member, at least one rotation prevention member, a first sliding member, and a connecting member. The at least one fastening member may be configured to fasten the housing to the external device by rotation of the housing. The at least one rotation prevention member may be configured to be inserted into a receiving portion of the external device in a state in which the housing is fastened to the external device by the at least one fastening member. The operation member may be movable in a first direction by a force applied from the outside. The operation member may have an inclined surface at one end thereof that extends in a first direction. The first sliding member may include a second inclined surface facing the first inclined surface and a third inclined surface inclined in a direction opposite to the second inclined surface. The first sliding member may slide in a second direction by a force applied from the first inclined surface to the second inclined surface as the operation member moves in the first direction. The connecting member may include a fourth inclined surface adjacent to the third inclined surface. The connecting member may move in a third direction opposite to the first direction as the first sliding member slides in the second direction. The connecting member may be configured to engage with the at least one rotation prevention member.

In an embodiment, a device that is attachable to and detachable from an external device may include a housing, at least one fastening member, at least one rotation prevention member, and an operation member. The at least one fastening member may fasten the device to the external device by rotation of the housing. The at least one rotation prevention member may be inserted into a receiving portion of the external device in a first direction in a state in which the device is fastened by the at least one fastening member. The operation member may include a holding portion protruding from a surface exposed to the outside. The operation member may be configured to move in a second direction opposite to the first direction by a force applied from the outside via the protruding portion. The operation member may be coupled to move together with the at least one rotation prevention member.

### [Brief Description of Drawings]

FIG. 1 is a conceptual view illustrating an example of a structure of a fastening portion in which a device is coupled to an external device in an embodiment.
FIG. 2 is a conceptual view illustrating an example of a structure of a fastening portion in which a device is coupled to an external device in an embodiment.
FIG. 3 is a view illustrating appearances of the device according to an embodiment viewed from various directions.
FIG. 4 is an exploded perspective view of the device according to an embodiment.
FIG. 5 is a view illustrating a structure operated by the device according to an embodiment.
FIG. 6 is a view illustrating an operation of a rotation prevention member of the device according to an embodiment.
FIG. 7 is a view illustrating an operation in which the device according to an embodiment is detached from an external device.
FIG. 8 is a view illustrating a sliding member and an elastic member included in the device according to an embodiment.
FIG. 9 is a view illustrating an example of a fastening operation and a reverse rotation prevention structure according to rotation of the device according to an embodiment.
FIG. 10 is a view illustrating an example of a structure in which the device is fastened to an external device at various angles according to an embodiment.
FIG. 11 is a view illustrating an example of a state in which the device is coupled at various angles according to an embodiment.
FIG. 12 is a view illustrating an example of the structure of a fastening portion of the device according to an embodiment.
FIG. 13 is a view illustrating a structure operated by the device according to an embodiment.

### [Mode for the Invention]

Hereinafter, a device and a fastening structure according to embodiments of the disclosure will be described in detail with reference to the accompanying drawings.

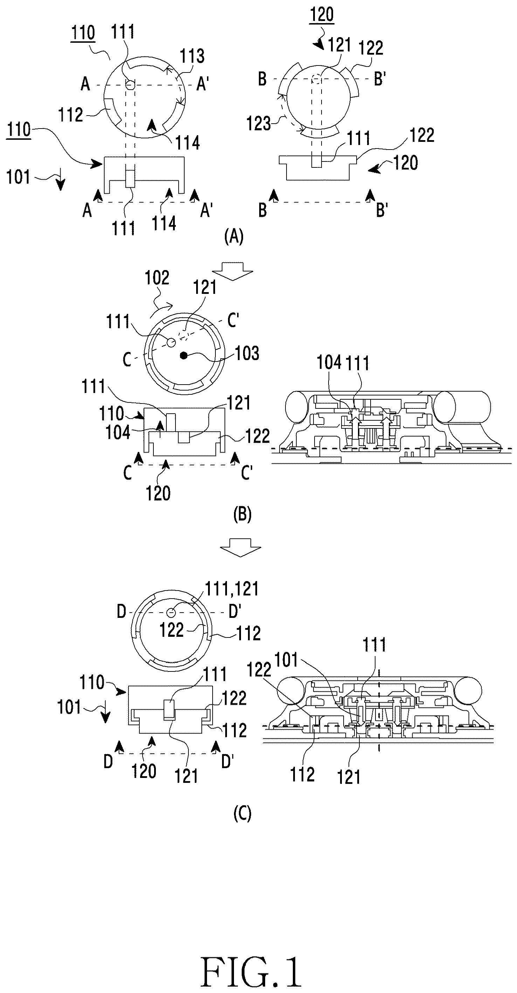

FIG. 1 is a conceptual view illustrating an example of a structure of a fastening portion 112 in which a device 110 is coupled to an external device 120 in an embodiment.

In an embodiment, the device 110 may be a device that is used in a state of being attached to the external device 120. For example, the device 110 may include an accessory device that is coupled to the external device 120 to provide a structure that makes it easy to hold the external device 120. The external device 120 may include a device that provides a structure configured to be coupled with the device 110. For example, the external device 120 may include a device mounted on the outside of a mobile device or a protective case attached to the outside of the mobile device. The device 110 may be coupled to the external device 120 so as to be attachable to and detachable from the external device 120.

In an embodiment, the device 110 may include at least one first fastening member 112 configured to fasten the device 110 to the external device 120. Referring to (A) of FIG. 1, the at least one first fastening member 112 may allow the device 110 to be fastened to the external device 120 as the device 110 rotates in a state in which at least a portion of the external device 120 is inserted into a lower space 114 of the device 110. Referring to (A) of FIG. 1, the at least one first fastening member 112 may have a shape that protrudes inward. The device 110 may include a rotation prevention member 111 configured to prevent the device 110 from rotating with respect to the external device 120 in a state in which the device 110 is fastened to the external device 120. Referring to (A) of FIG. 1, the rotation prevention member 111 may be disposed to protrude outward from the device 110 in a first direction 101. The rotation prevention member 111 protruding outward from the device 110 may be configured to be inserted into the lower space 114 of the device 110 by a force applied from outside. The rotation prevention member 111 inserted into the device 110 may be restored to a position in which it protrudes outward from the device 110 when no force is applied from outside.

In an embodiment, the external device 120 may include at least one second fastening member 122 configured to fasten the external device 120 to the device 110. The at least one second fastening member 122 may be insertable into the lower space 114 of the device 110 through a region 113 in which the at least one first fastening member 112 of the device 110 is not disposed. The at least one first fastening member 112 of the device 110 may be insertable into a region 123 in which the at least one second fastening member 122 is not disposed. According to an embodiment, a width of the at least one first fastening member 112 of the device 110 may be equal to or less than a spacing of the region 123. A width of the at least one second fastening member 122 of the external device 120 may be equal to or less than a spacing of the region 113. Referring to (A) of FIG. 1, the at least one second fastening member 122 may have a shape that protrudes outward. The external device 120 may include a receiving portion 121 configured to receive the rotation prevention member 111.

(B) of FIG. 1 illustrates a state in which a portion of the external device 120 including the second fastening member 122 is inserted into the lower space 114 of the device 110. Referring to the cross-sectional view taken along line C-C' of (B) of FIG. 1, since the positions of the rotation prevention member 111 and the receiving portion 121 do not align, the rotation prevention member 111 may be pushed upward in a direction 104 opposite to the first direction (101 of (A) and (C) of FIG. 1) by the external device 120.

(C) of FIG. 1 illustrates a state in which the device 110 is rotated (e.g., in the rotation direction 102 of FIG. 1(B)) and fastened to the external device 120 from the state illustrated in (B) of FIG. 1. As the device 110 rotates (e.g., in the rotation direction 102 of (B) of FIG. 1), the position of the at least one first fastening member 112 may shift, and the device 110 may be fastened to the external device 120 by engaging with the second fastening member 122 of the external device 120. Referring to the cross-sectional view taken along line D-D' of (C) of FIG. 1, the rotation prevention member 111 may move in the first direction 101 as it aligns with the position of the receiving portion 121. According to an embodiment, the rotation prevention member 111 may move in the first direction 101 and be inserted into the receiving portion 121 of the external device 120. As the rotation prevention member 111 is inserted into the receiving portion 121, the device 110 may be prevented from rotating and returning to the state illustrated in (B) of FIG. 1. Accordingly, separation of the device 110 from the external device 120 may be prevented. The rotation prevention member 111 of FIG. 1 may be positioned to be spaced apart by a predetermined distance from a rotation center 103 of (B) of FIG. 1, thereby preventing the device 110 from rotating relative to the external device 120. Therefore, release of the fastening members 112 and 122 due to rotation of the device 110 may be prevented.

In an embodiment, the rotation prevention member 111 may have a rod shape with a cross section other than a circular cylinder (e.g., elliptical or polygonal). The receiving portion 121 may have a shape corresponding to the shape of the rotation prevention member 111. When the rotation prevention member 111 has a rod having a cross-sectional shape other than that of a circular cylinder, the rotation prevention member 111 may be positioned at the rotation center 103.

FIG. 1 illustrates a structure in which the device 110 includes the rotation prevention member 111 protruding in the first direction 101, and the external device 120 includes the receiving portion 121. In an embodiment, the external device 120 may include a structure that protrudes outward, and the rotation prevention member 111 of the device 110 may be configured in the form of a recess configured to receive the protruding structure of the external device 120.

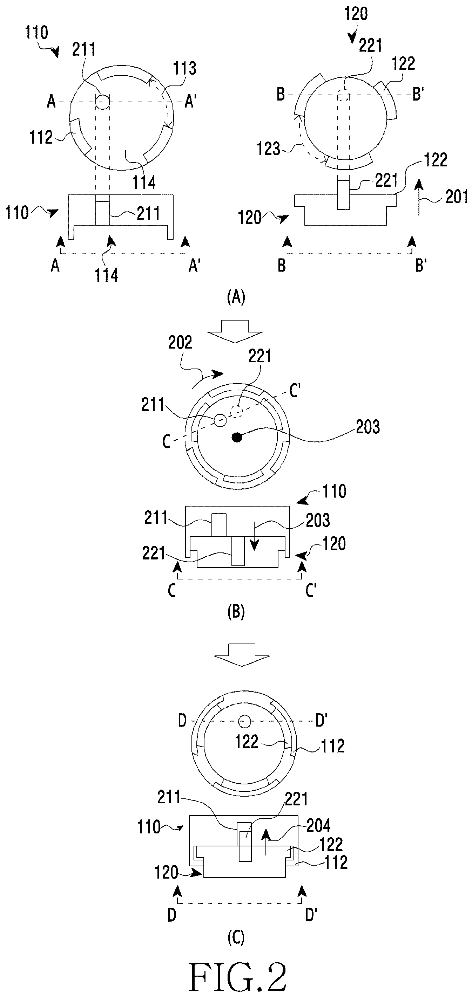

FIG. 2 is a conceptual view illustrating an example of a structure of a fastening portion 112 in which the device 110 is coupled to the external device 120 in an embodiment.

In an embodiment, referring to (A) of FIG. 2, the external device 120 may include a protruding structure 221 that protrudes in a first direction 201. A rotation prevention member 211 of the device 110 may include a recess configured to receive the protruding structure 221 of the external device 120. The device 110 may include at least one first fastening member 112 configured to fasten the device 110 to the external device 120. Referring to (A) of FIG. 2, the at least one first fastening member 112 may allow the device 110 to be fastened to the external device 120 as the device 110 rotates in a state in which at least a portion of the external device 120 is inserted into a lower space 114 of the device 110.

In an embodiment, the external device 120 may include at least one second fastening member 122 configured to fasten the external device 120 to the device 110. The at least one second fastening member 122 may be insertable into the lower space 114 of the device 110 through a region 113 in which the at least one first fastening member 112 of the device 110 is not disposed. The at least one first fastening member 112 of the device 110 may be insertable into a region 123 in which the at least one second fastening member 122 is not disposed. A width of the at least one second fastening member 112 of the external device 110 may be equal to or less than a spacing of the region 123. A width of the at least one second fastening member 122 of the external device 120 may be equal to or less than a spacing of the region 113.

(B) of FIG. 2 illustrates a state in which a portion of the external device 120 including the second fastening member 122 is inserted into the lower space 114 of the device 110. Referring to (B) of FIG. 2, as the external device 120 is inserted into the lower space 114 of the device 110, the protruding structure 221 of the external device 120 may be pushed in a second direction 203 by the device 110.

(C) of FIG. 2 illustrates a state in which the device 110 is fastened to the external device 120 by being rotated in a direction 202 from the state illustrated in (B) of FIG. 2. As the device 110 is rotated in the direction 202, the position of at least one first fastening member 112 may shift, and the device 110 may be fastened to the external device 120 by engaging with the second fastening member 122 of the external device 120. Referring to the cross-sectional view taken along line D-D' of (C) of FIG. 2, as the rotation prevention structure 211 aligns with the position of the protruding structure 221, the protruding structure 221 may be inserted into the rotation prevention member 211. As the protruding structure 221 is inserted into the rotation prevention structure 211, the device 110 may be prevented from rotating and returning to the state illustrated in (B) of FIG. 2. Accordingly, separation of the device 110 from the external device 120 may be prevented. The rotation prevention member 211 of FIG. 2 may be positioned to be spaced apart by a predetermined distance from a rotation center 203 of (B) of FIG. 2, thereby preventing the device 110 from rotating relative to the external device 120. Therefore, release of the fastening members 112 and 122 due to rotation of the device 110 may be prevented.

In an embodiment, the rotation prevention member 221 may have a rod shape with a cross section other than a circular cylinder (e.g., elliptical or polygonal). The receiving portion 221 may have a shape corresponding to the shape of the rotation prevention member 211. When the rotation prevention member 211 has a shape of a rod having a cross-sectional shape other than that of a circular cylinder, the rotation prevention member 211 may be positioned at the rotation center 203.

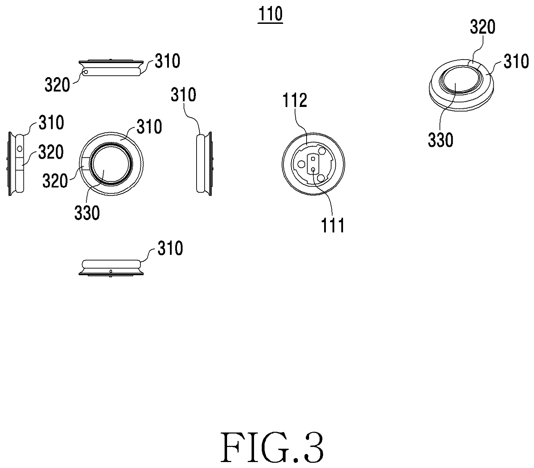

FIG. 3 is a view illustrating appearances of the device 110 according to an embodiment viewed from various directions.

The device 110 according to an embodiment may further include an operation member 330 configured to allow the rotation prevention member 111 to operate. The device 110 may be configured such that the rotation prevention member 111 operates via the operation member 330, allowing the device 110 to rotate in the state of being coupled to the external device 120.

The device 110 according to an embodiment may include a ring portion 310 pivotably connected to a housing of the device 110. The ring portion 310 may pivot about a hinge 320 connected to the housing of the device 110. The ring portion 310 may form a cavity configured to receive the operation member 330 at a specific angle.

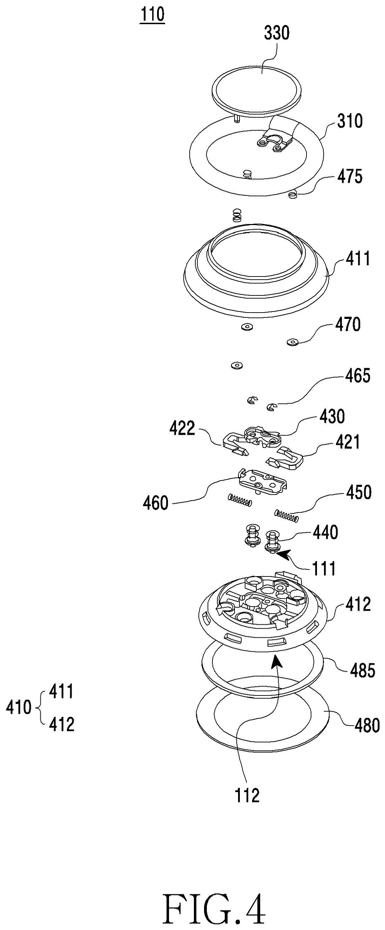

FIG. 4 is an exploded perspective view of the device 110 according to an embodiment. Hereinafter, FIGS. 4 to 13 will be described based on an embodiment including a rotation prevention structure 111 in a form that protrudes outward from the device 110, as illustrated in FIG. 1. However, the rotation prevention structure 111 presented in the disclosure may also be configured in a form that receives the protruding structure 221 that protrudes from the external device 120, as illustrated in FIG. 2.

The device 110 according to an embodiment may include a housing 410, at least one first fastening member 112 (e.g., the first fastening member 112 of FIG. 3), at least one rotation prevention member 111, an operation member 330, a first sliding member 421, and a connecting member 430.

Referring to FIG. 4, in an embodiment, the housing 410 may include an upper housing 411 and a lower housing 412. The at least one rotation prevention member 111, the operation member 330, the first sliding member 421, and the connecting member 430 may be disposed in a space formed between the upper housing 411 and the lower housing 412. In an embodiment, the device 110 may further include at least one component selected from a second sliding member 422 disposed between the upper housing 411 and the lower housing 412, at least one first elastic member 440, at least one second elastic member 450, a support member 460, an e-ring 465, or a washer 470. In an embodiment, the device 110 may further include at least one third elastic member 475 disposed between the operation member 330 and the upper housing 411.

In an embodiment, in a state in which the ring portion 310 pivotably connected to the upper housing 411 is disposed at a specific angle with respect to the upper housing 411, the operation member 330 may be disposed to be at least partially received in a cavity formed by the ring portion 310. At least one of the first sliding member 421 or the second sliding member 422 may be disposed to slide as the operation member 330 moves. The connecting member 430 may be lifted from the support member 460 as at least one of the first sliding member 421 or the second sliding member 422 moves. The support member 460 may be fixed to the upper housing 411 or the lower housing 412. In FIG. 4, the support member 460 is illustrated as a separate component from the housing 410, but may be formed as a support portion integrally formed with the housing 410.

In an embodiment, the at least one first elastic member 440 may be disposed in a direction in which a restoring force is generated so that the rotation prevention member 111 protrudes outward from the housing 410. The at least one second elastic member 450 may be disposed in a direction in which a restoring force is generated to shift the position of the slid first sliding member 421 or second sliding member 422 back to the position before sliding. The e-ring 465 may fix the rotation prevention member 111 to the connecting member 430. The at least one washer 470 may be disposed to prevent the operation member 330 from deviating beyond an operating range. The at least one third elastic member 475 may be disposed to support the operation member 330.

In an embodiment, a damage prevention member 480 made of a soft material may be disposed on a surface of the lower housing 412 that is in contact with another device, so as to prevent damage to the device 110 or the other device. The damage prevention member 480 may be attached to the lower housing 412 by an adhesive member 485.

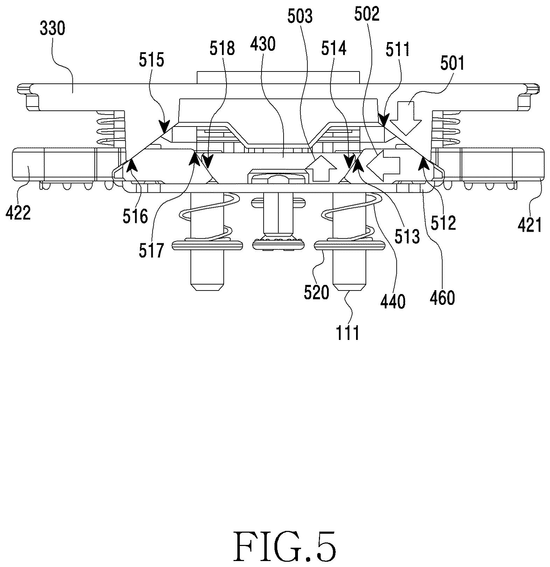

FIG. 5 is a view illustrating a structure operated by the device 110 according to an embodiment.

In an embodiment, the operation member 330 of the device 110 may include a first inclined surface 511 formed at one end extending in a first direction 501. Referring to FIG. 5, the first inclined surface 511 may be formed to decrease in height in a second direction 502 with respect to a surface of the operation member 330 to which a user applies force from outside. The second direction 502 may be different from the first direction 501. For example, the second direction 502 may be a direction substantially perpendicular to the first direction 501. A first sliding member 421 of the device 110 may include a second inclined surface 512 that faces the first inclined surface 511. The second inclined surface 512 may be arranged to increase in height in the second direction 502 with respect to the support member 460.

In an embodiment, as the user applies force to the operation member 330 and the operation member 330 moves in the first direction 501, the first sliding member 421 may slide in the second direction 502 by the force transferred from the operation member 330 through the second inclined surface 512. The first sliding member 421 may further include a third inclined surface 513 formed in the second direction 502 from the second inclined surface 512. The third inclined surface 513 may be arranged to decrease in height in the second direction 502 with respect to the support member 460.

In an embodiment, the connecting member 430 may include a fourth inclined surface 514 that faces the third inclined surface 513. The fourth inclined surface 514 may be arranged to come into contact with the third inclined surface 513. The fourth inclined surface 514 may be arranged to decrease in height in the second direction 502 with respect to the support member 460. The connecting member 430 may be lifted in a third direction 503, which is opposite to the first direction 501, as the first sliding member 421 slides in the second direction 502. The connecting member 430 may be coupled to the rotation prevention member 111. For example, the rotation prevention member 111 may be coupled to the connecting member 430 by an e-ring 465 illustrated in FIG. 4. As the connecting member 430 is lifted in the third direction 503, the rotation prevention member 111 may also be lifted in the third direction 503.

In an embodiment, the device 110 may include a first elastic member 440 disposed between a flange 520 formed along an outer circumferential surface of a shaft-shaped portion included in the rotation prevention member 111 and the support member 460. For example, the first elastic member 440 may include a coil spring disposed to surround the outer circumferential surface of the shaft-shaped portion of the rotation prevention member 111. The first elastic member 440 may be compressed between the flange 520 and the support member 460 as the connecting member 430 and the rotation prevention member 111 are lifted in the third direction 503. The rotation prevention member 111 and the connecting member 430 may move in the first direction 501 by a restoring force generated by the first elastic member 440. As the connecting member 430 moves in the first direction 501, the first sliding member 421 may move in a direction opposite to the second direction 502. As the first sliding member 421 moves in the direction opposite to the second direction 502, the operation member 330 may move in the third direction 503.

In an embodiment, the device 110 may further include a second sliding member 422 disposed in the second direction 502 with respect to the first sliding member 421. The operation member 330 may further include a fifth inclined surface 515 formed at a position extending in the first direction 501 from a position different from the first inclined surface 511. Referring to FIG. 5, the fifth inclined surface 515 may be formed to increase in height in the second direction 502 with respect to a surface of the operation member 330 to which a user applies force from outside. The second sliding member 422 of the device 110 may include a sixth inclined surface 516 that faces the fifth inclined surface 515. The fifth inclined surface 515 may be arranged to decrease in height in the second direction 502 with respect to the support member 460.

In an embodiment, as the user applies force to the operation member 330 and the operation member 330 moves in the first direction 501, the second sliding member 422 may slide in a direction opposite to the second direction 502 by the force transferred from the operation member 330 through the sixth inclined surface 516. The second sliding member 422 may further include a seventh inclined surface 517 formed in a direction opposite to the second direction 502 from the sixth inclined surface 516. The seventh inclined surface 517 may be arranged to increase in height in the second direction 502 with respect to the support member 460.

In an embodiment, the connecting member 430 may further include an eighth inclined surface 518 that faces the seventh inclined surface 517. The eighth inclined surface 518 may be arranged to be in contact with the seventh inclined surface 517. The connecting member 430 may be lifted in the third direction 503 as the second sliding member 422 slides in the direction opposite to the second direction 502. The connecting member 430 may receive a lifting force in the third direction 503 from both directions by the first sliding member 421 and the second sliding member 422. Accordingly, the connecting member 430 may maintain its balance during the process of being lifted in the third direction 503.

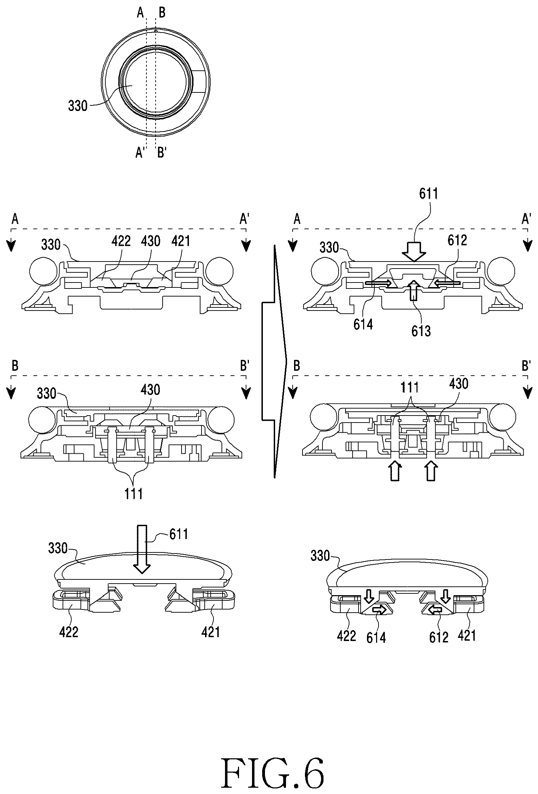

FIG. 6 is a view illustrating an operation of a rotation prevention member 111 of an device 110 according to an embodiment.

In an embodiment, the device 110 may include an operation member 330, a first sliding member 421, a second sliding member 422, a connecting member 430, and a rotation prevention member 111. Referring to FIG. 6, in a state in which the device 110 is coupled to an external device 120, the rotation prevention member 111 may be positioned to protrude outside the device 110. To separate the device 110 from the external device 120, a user may press the operation member 330 in a first direction 611.

In an embodiment, as the operation member 330 moves in the first direction 611, the first sliding member 421 may move in a second direction 612 by a force transferred from the operation member 330. As the operation member 330 moves in the first direction 611, the second sliding member 422 may move in a fourth direction 614 by a force transferred from the operation member 330.

In an embodiment, as the first sliding member 421 and the second sliding member 422 slide toward the connecting member 430, the connecting member 430 may be lifted in a third direction 613 by the first sliding member 421 and the second sliding member 422. Accordingly, the rotation prevention member 111 connected to the connecting member 430 may also be lifted in the third direction 613.

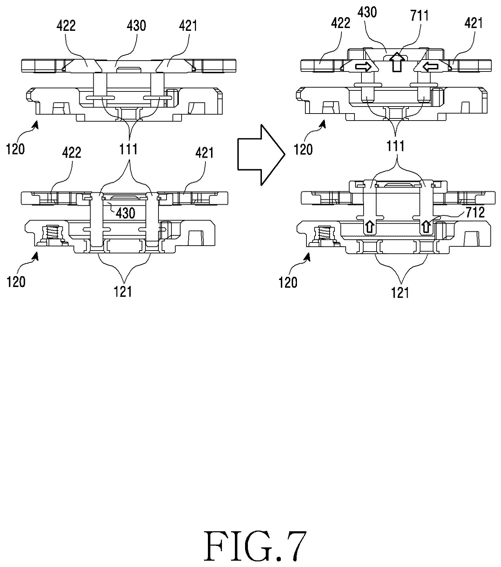

FIG. 7 is a view illustrating an operation in which the device 110 is detached from the external device 120 according to an embodiment.

In an embodiment, in a state in which the device 110 is fastened to the external device 120, the rotation prevention member 111 may be inserted into the receiving portion 121 formed in the external device 120.

In an embodiment, as the first sliding member 421 and the second sliding member 422 move toward the connecting member 430, the connecting member 430 may be lifted in a first direction 711. As the connecting member 430 is lifted in the first direction 711, the rotation prevention member 111 may also be lifted in a first direction 712. The rotation prevention member 111 may be slid out from the receiving portion 121 of the external device 120 by being lifted in the first direction 712. In a state in which the rotation prevention member 111 is separated from the receiving portion 121, the housing 410 may rotate, so that the device 110 may be detached from the external device 120.

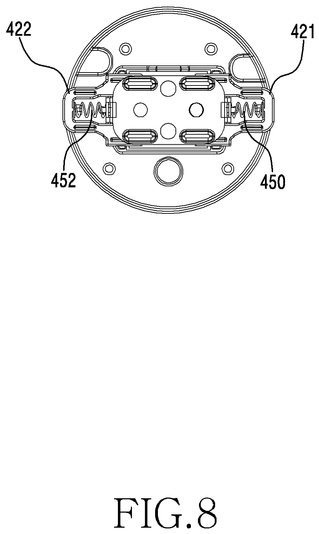

FIG. 8 is a view illustrating the sliding members 421 and 422 and the elastic members 450 included in the device 110 according to an embodiment.

The device 110 according to an embodiment may include at least one of the first sliding member 421 or the second sliding member 422. The device 110 may include a second elastic member 450 configured to restore the position of the first sliding member 421 in a state in which no external force is applied. The device 110 may further include a third elastic member 452 configured to restore the position of the second sliding member 422.

In an embodiment, at least one of the second elastic member 450 or the third elastic member 451 may be omitted. To allow at least one of the second elastic member 450 or the third elastic member 451 to be omitted, inclined surfaces formed in the operating structure of the device 110 may be configured not to be spaced apart. Referring to FIG. 5, while the operation member 330 is positioned within an operation section, which is a range in which the operation member 330 moves, the first inclined surface 511 of FIG. 5 and the second inclined surface 512 of FIG. 5 may at least partially remain in contact with each other. While the operation member 330 is positioned within the operation section, which is a range in which the operation member 330 moves, the third inclined surface 513 of FIG. 5 and the fourth inclined surface 514 of FIG. 5 may at least partially remain in contact with each other. While the operation member 330 is positioned within the operation section, which is a range in which the operation member 330 moves, the fifth inclined surface 515 of FIG. 5 and the sixth inclined surface 516 of FIG. 5 may at least partially remain in contact with each other. While the operation member 330 is positioned within the operation section, the seventh inclined surface 517 of FIG. 5 and the eighth inclined surface 518 of FIG. 5 may remain in contact with each other. Even when at least one of the second elastic member 450 or the third elastic member 452 is not provided, the position of the first sliding member 421 and/or the second sliding member 422 may be restored as the rotation prevention member 111 and the connecting member 430 move in the first direction 501 of FIG. 5 by the first elastic member 440 of FIG. 5.

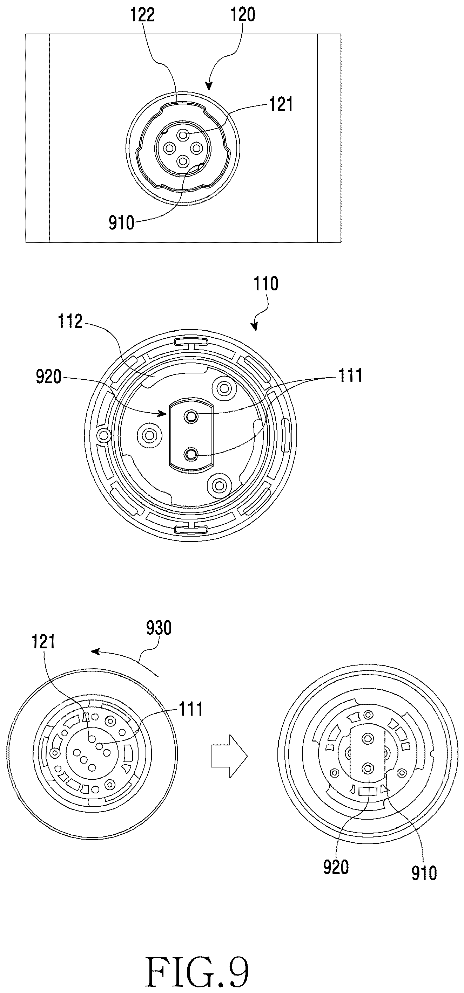

FIG. 9 is a view illustrating an example of a fastening operation and a reverse rotation prevention structure according to rotation of the device 110 according to an embodiment.

According to an embodiment, the external device 120 may include one or more receiving portions 121. The external device 120 may include at least one reverse rotation prevention portion 910 configured to restrict a rotation operation of the device 110 with respect to the external device 120. The reverse rotation prevention portion 910 may include a protrusion that protrudes in a direction opposite to a direction in which at least one second fastening member 122 protrudes. For example, as illustrated in FIG. 9, when at least one second fastening member 122 protrudes outward with respect to a central axis about which the device 110 rotates, the reverse rotation prevention portion 910 may include a protrusion that protrudes inward.

According to an embodiment, the device 110 may include a protrusion 920 that comes into contact with the reverse rotation prevention portion 910 as the device 110 rotates 930 with respect to the external device 120. Referring to FIG. 9, the protrusion 920 may be arranged to surround at least one rotation prevention member 111 in a lower space of the device 110 (e.g., the lower space 114 of FIG. 1).

In an embodiment, the device 110 may rotate 930 with respect to the external device 120 in a state in which the rotation prevention member 111 is not inserted into the receiving portion 121. The rotation range of the device 110 may be limited by the protrusion 920 of the device 110 being caught by the reverse rotation prevention portion 910 of the external device 120.

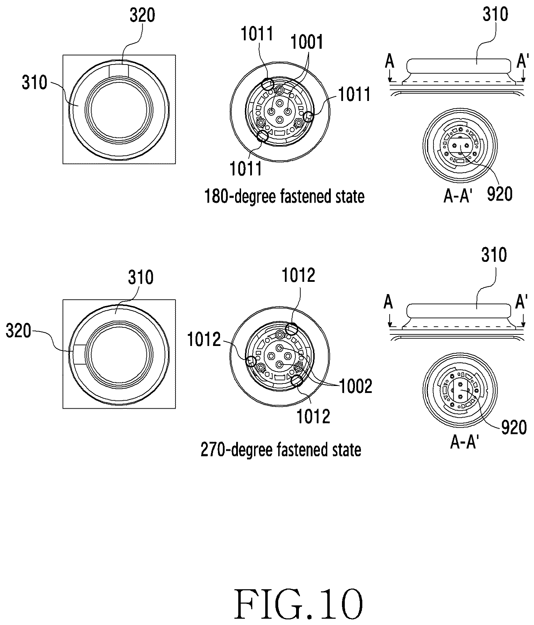

FIG. 10 is a view illustrating an example of a structure in which the device 110 is fastened to an external device at various angles according to an embodiment.

According to an embodiment, the reverse rotation prevention portion 910 may be omitted from the external device 120. The external device 120 may include a plurality of receiving portions 121. The device 110 may rotate freely with respect to the external device 120, and at least one rotation prevention member 111 may be inserted into some of the plurality of receiving portions 121. When the device 110 rotates in a clockwise direction, the rotation prevention member 111 may be inserted into a first receiving portion 1001. In a state in which the rotation prevention member 111 is inserted into the first receiving portion 1001, at least one first fastening member 112 of the device 110 and at least one second fastening member 122 of the external device 120 may overlap in a first region 1011. The device 110 and the external device 120 may be fastened to each other by a structure in which the fastening members 112 and 122 overlap in the first region 1011.

According to an embodiment, when the device 110 rotates counterclockwise, the rotation prevention member 111 may be inserted into a second receiving portion 1002. In a state in which the rotation prevention member 111 is inserted into the second receiving portion 1002, at least one first fastening member 112 of the device 110 and at least one second fastening member 122 of the external device 120 may overlap in a second region 1012. The device 110 and the external device 120 may be fastened to each other by a structure in which the fastening members 112 and 122 overlap in the second region 1012.

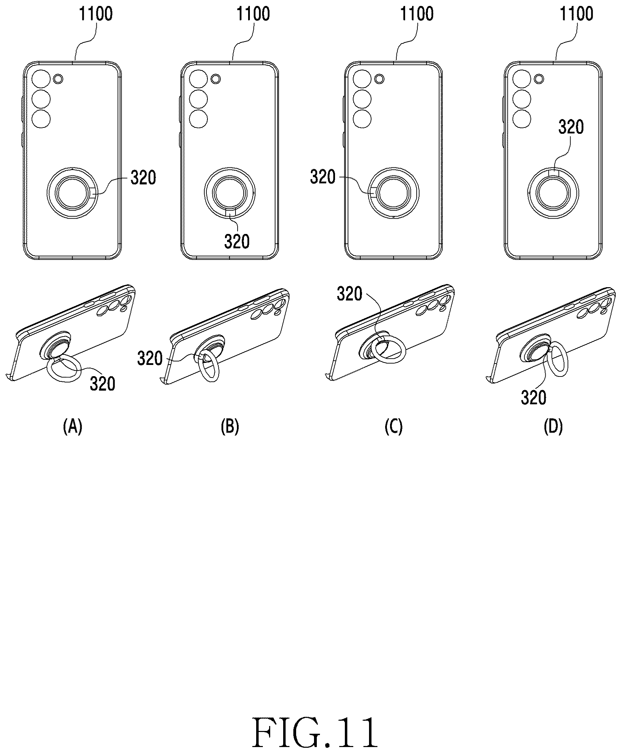

FIG. 11 is a view illustrating an example in which the device 110 according to an embodiment is coupled to the external device 120 at various angles.

As illustrated in FIGS. 9 and 10, when the external device 120 includes four receiving portions 121, the device 110 may be fastened to the external device 120 at four or more orientations. (A) of FIG. 11 illustrates an example in which the hinge 320 is coupled to a protective case 1100 on which the external device 120 is mounted, such that the hinge 320 is arranged in the first direction. (B) of FIG. 11 illustrates an example in which the hinge 320 is coupled to the protective case 1100 on which the external device 120 is mounted, such that the hinge 320 is arranged in the second direction. (C) of FIG. 11 illustrates an example in which the hinge 320 is coupled to the protective case 1100 on which the external device 230 is mounted, such that the hinge 320 is arranged in the third direction. (D) of FIG. 11 illustrates an example in which the hinge 320 is coupled to the protective case 1100 on which the external device 230 is mounted, such that the hinge 320 is arranged in the fourth direction. By allowing the device 110 to be coupled to the external device at various angles, the usability of the device 110 may be enhanced.

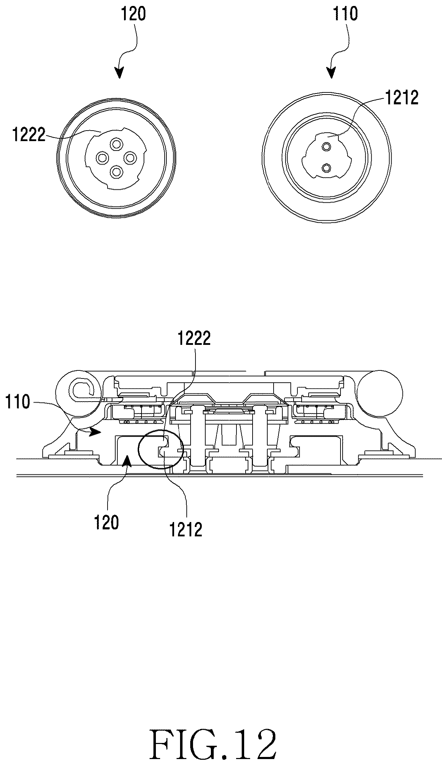

FIG. 12 is a view illustrating an example of the structure of the fastening portion of the device 1100 according to an embodiment.

Although FIGS. 1 to 11 illustrate that the device 110 includes the first fastening member 112 protruding inward and the external device 120 includes the second fastening member 122 protruding outward, the arrangement directions of the fastening members 112 and 122 are not limited thereto. Referring to FIG. 12, the device 110 may include at least one fastening member 1212 that protrudes outward. The external device 120 may include at least one fastening member 1222 that protrudes inward. The device 110 may be fastened to the external device 120 by rotating the device 110 and the at least one fastening member 1212 in a state in which the at least one fastening member 1212 of the device 110 is inserted into the external device 120.

In an embodiment, referring to FIGS. 1 to 7, the device 110 may be configured to be rotatable when a user presses the operation member 330. In an embodiment, the device 110 may also be configured to be rotatable when the user pulls the operation member 330.

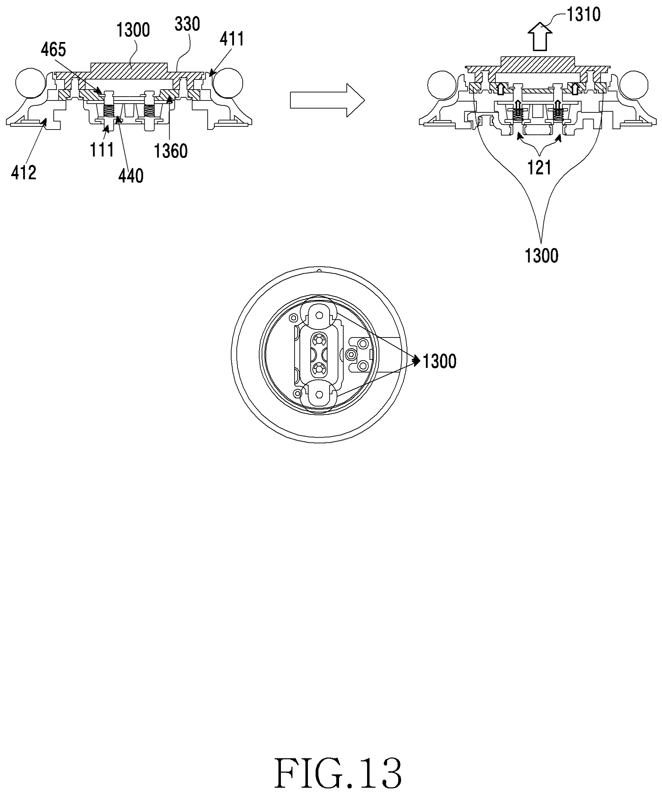

FIG. 13 is a view illustrating a structure operated by the device 110 according to an embodiment.

According to an embodiment, the device 110 may include housings (an upper housing 411 and a lower housing 412), an operation member 330, a connecting member 1360, a first elastic member 440, and a rotation prevention member 111.

In an embodiment, the connecting member 1360 may be coupled to the operation member 330 so as to move together with the operation member 330. The rotation prevention member 111 may be connected to the connecting member 1360 so as to move together with the connecting member 1360. For example, the rotation prevention member 111 may be fixed to the connecting member 1360 by an E-ring 465. The connecting member 1360 according to an embodiment may include a holding portion 1300 for a user to hold the operation member 330. For example, the holding portion 1300 may have a form protruding from a surface forming the exterior of the device 110.

In an embodiment, the operation member 330, the connecting member 1360, and the rotation prevention member 111 may move in a first direction 1310 by a force applied by pulling the operation member 330 in the first direction 1310. The rotation prevention member 111 may be slid out from the receiving portion 121 of the external device 120 by moving in the first direction 1310. The operation member 330, the connecting member 1360, and the rotation prevention member 111 may move in a direction opposite to the first direction 1310 by a restoring force generated by the first elastic member 440.

In an embodiment, the connecting member 1360 may include a shape 1300 that is fitted into the upper housing 411 in a state in which the connecting member 1360 has moved in the first direction 1310. By the connecting member 1360 being fitted into the upper housing 411, the device 110 may be separated from the external device 120 by a user rotating the operation member 330 while holding the holding portion 1300.

An embodiment may provide a device including a coupling structure that is capable of being easily coupled to an external device so as to improve usability of the external device.

An embodiment may provide a device including a structure configured to prevent the device from rotating with respect to an external device in a state coupled to the external device by the rotation of the device so as to prevent unfastening from the external device.

An embodiment may provide a device including a structure that allows a user to easily attach and detach the device to and from an external device when the user intends to attach and detach the device to and from the external device.

The technical subjects pursued in the disclosure may not be limited to the above-mentioned technical subjects, and other technical subjects which are not mentioned herein may be clearly understood from the following description by those skilled in the art to which the disclosure pertains.

A device according to various embodiments may provide a coupling structure that allows the device to be easily coupled to an external device by rotating the device.

A device according to various embodiments may provide a coupling structure that is capable of preventing unfastening from the external device regardless of a user's intention in a state in which the device is coupled to an external device.

A device according to various embodiments may provide a structure that allows a user to easily attach and detach the device to and from an external device.

Advantageous effects obtainable from the disclosure may not be limited to the above-mentioned effects, and other effects which are not mentioned herein may be clearly understood from the following description by those skilled in the art to which the disclosure pertains.

In an embodiment, a device 110 that is attachable to and detachable from an external device 120 may include a housing 410, at least one fastening member 112 or 1212, at least one rotation prevention member 111, a first sliding member 421, and a connecting member 430. The at least one fastening member 112 or 1212 may be configured to fasten the housing 410 to the external device 120 by rotation of the housing 410. The at least one rotation prevention member 111 may be configured to be inserted into a receiving portion 121 of the external device 120 when the housing 410 is fastened to the external device 120 by the at least one fastening member 112 or 1212. The operation member 330 may be movable in a first direction (e.g., the first direction 501 of FIG. 1) by a force applied from the outside. The operation member 330 may have an inclined surface 511 at one end thereof that extends in a first direction (e.g., the first direction 501 of FIG. 1). The first sliding member 421 may include a second inclined surface 512 facing the first inclined surface 511 and a third inclined surface 513 inclined in a direction opposite to the second inclined surface 512. The first sliding member 421 may slide in a second direction (e.g., the second direction 502 of FIG. 5) by a force applied from the first inclined surface 511 to the second inclined surface 512 as the operation member 330 moves in the first direction (e.g., the first direction 501 of FIG. 1). The connecting member 430 may include a fourth inclined surface 514 adjacent to the third inclined surface 513. The connecting member 430 may move in a third direction (e.g., the third direction 503 of FIG. 5) opposite to the first direction (e.g., the first direction 501 of FIG. 5) as the first sliding member 421 slides in the second direction (e.g., the second direction 502 of FIG. 5). The connecting member 430 may be configured to engage with the at least one rotation prevention member 110.

In an embodiment, the second direction (e.g., the second direction 502 of FIG. 5) may be oriented substantially perpendicular to the first direction (e.g., the first direction 510 of FIG. 5).

In an embodiment, the at least one fastening member 112 or 1212 may include at least one protrusion protruding from a lower end of the housing 410.

In an embodiment, the device 110 may further include a ring portion 310 that is rotatably connected to the housing 410 and defines a cavity configured to receive the operation member 330 at a specific angle.

In an embodiment, the device 110 may further include at least one first elastic member 440 configured to transfer a restoring force to the at least one rotation prevention member 111 in the first direction (e.g., the first direction 501 of FIG. 5).

In an embodiment, the at least one rotation prevention member 111 may include a shaft having a rod shape. The at least one rotation prevention member 111 may further include a flange 520 protruding from an outer circumferential surface of the shaft. The at least one first elastic member 440 may include a spring disposed to surround the shaft between a support portion of the housing 410 and the flange 520, or between a support member 460 fixed to the housing 410 and the flange 520.

In an embodiment, the device 110 may further include at least one e-ring 465 configured to fix the at least one rotation prevention member 111 to the support portion or the support member 460.

In an embodiment, the operation member 330, the first sliding member 521, and the connecting member 430 may be configured such that, while the operation member 330 is positioned within an operation section including a range in which the operation member 330 moves, the first inclined surface 511 and the second inclined surface 512 remain at least partially in contact with each other, and the third inclined surface 513 and the fourth inclined surface 514 remain at least partially in contact with each other.

In an embodiment, the device 110 may further include at least one second elastic member 450 disposed to apply a restoring force to the first sliding member 421 in a direction opposite to the second direction (e.g., the second direction 502 of FIG. 5).

In an embodiment, the device 110 may further include at least one third elastic member 475 disposed to maintain the position of the operation member 330 with respect to the housing 410.

In an embodiment, the device 110 may further include a second sliding member 422 positioned in the second direction (e.g., the second direction 502 of FIG. 5) with respect to the first sliding member 421. The second sliding member 422 may be disposed to move in a direction opposite to the second direction (e.g., the second direction 502 of FIG. 5) as the operation member 330 moves in the first direction (e.g., the first direction 501 of FIG. 5).

In an embodiment, the operation member 330 may further include a fifth inclined surface 515 formed at one end thereof extending in the first direction at a position different from the first inclined surface 511. The second sliding member 422 may include a sixth inclined surface 516 adjacent to the fifth inclined surface 515. The second sliding member 422 may slide in a direction opposite to the second direction (e.g., the second direction 502 of FIG. 5) by a force applied from the fifth inclined surface 515 to the sixth inclined surface 516 as the operation member 330 moves in the first direction (e.g., the first direction 501 of FIG. 5).

In an embodiment, the second sliding member 422 may further include a seventh inclined surface 517 inclined in a direction opposite to the sixth inclined surface 516. The connecting member 430 may further include an eighth inclined surface 518 adjacent to the seventh inclined surface 517. The connecting member 430 may move in a third direction (e.g., the third direction 530 of FIG. 5) as the second sliding member 422 slides in a direction opposite to the second direction (e.g., the second direction 502 of FIG. 5).

In an embodiment, the at least one rotation prevention member 111 may be disposed at a position offset from a central axis about which the device 110 rotates in a state in which at least a portion of the external device 120 is inserted into the device 110 and the device 110 rotates.

In an embodiment, the at least one rotation prevention member 111 may include a first rotation prevention member 111 positioned in a fourth direction from the central axis, and a second rotation prevention member positioned in a direction opposite to the fourth direction from the central axis.

In an embodiment, a device 110 that is attachable to and detachable from an external device 120 may include a housing 410, at least one fastening member 112 or 1212, at least one rotation prevention member 111, and an operation member 330. The at least one fastening member 112 or 1212 may fasten the device 110 to the external device 120 by rotation of the housing 410. The at least one rotation prevention member 111 may be inserted into a receiving portion of the external device 120 in a first direction in a state in which the device 110 is fastened by the at least one fastening member 112 or 1212. The operation member 330 may include a holding portion 1300 protruding from a surface exposed to the outside. The operation member 330 may be configured to move in a second direction opposite to the first direction (e.g., the first direction 1310 of FIG. 13), by a force applied from the outside via the protruding portion. The operation member 330 may be coupled to move together with the at least one rotation prevention member 111.

In an embodiment, the at least one fastening member 112 or 1212 may include at least one protrusion protruding from a lower end of the housing 410.

In an embodiment, the device 110 may further include a ring portion 310 rotatably connected to the housing 410. The ring portion 310 may define a cavity configured to receive the operation member at a specific angle.

In an embodiment, the device 110 may further include an elastic member 440 disposed to apply a restoring force to the at least one rotation prevention member 110 or the operation member 330 in the first direction.

In an embodiment, the holding portion 1300 may include a knob shape.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Particular implementations described herein are merely an embodiment, and do not limit the scope of the disclosure in any way. For the brevity and conciseness of the specification, a description of conventional electronic components, control systems, software, and other functional aspects of these systems may be omitted.

Also, as used herein, the expression "including at least one of a, b, or c" may mean "including only a", "including only b", "including only c", "including a and b", "including b and c", "including a and c", or "including a, b, and c all".

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A device that is attachable to and detachable from an external device, the device comprising:
a housing;
at least one fastening member configured to fasten the housing to the external device by rotation of the housing;
at least one rotation prevention member configured to be inserted into a receiving portion of the external device in a state in which the housing is fastened to the external device by the at least one fastening member;
an operation member configured to move in a first direction by a force applied from outside, the operation member having a first inclined surface formed at one end extending in the first direction;
a first sliding member comprising a second inclined surface facing the first inclined surface, and a third inclined surface inclined in a direction opposite to the second inclined surface, the first sliding member being configured to slide in a second direction by a force applied to the second inclined surface from the first inclined surface as the operation member moves in the first direction; and
a connecting member comprising a fourth inclined surface adjacent to the third inclined surface, the connecting member being configured to move in a third direction opposite to the first direction as the first sliding member slides in the second direction, and to be coupled to the at least one rotation prevention member.

2. The device of claim 1, wherein the second direction is oriented substantially perpendicular to the first direction.

3. The device of claim 1, wherein the at least one fastening member comprises at least one protrusion protruding from a lower end of the housing.

4. The device of claim 1, further comprising:
a ring portion rotatably connected to the housing and defining a cavity configured to receive the operation member at a specific angle.

5. The device of claim 1, further comprising:
at least one first elastic member configured to transfer a restoring force to the at least one rotation prevention member in the first direction.

6. The apparatus of claim 5, wherein the at least one rotation prevention member comprises a shaft having a rod shape and a flange protruding from an outer circumferential surface of the shaft, and
wherein the at least one first elastic member comprises a spring disposed to surround the shaft between a support portion of the housing and the flange, or between a support member fixed to the housing and the flange.

7. The device of claim 6, further comprising:
at least one e-ring configured to fix the at least one rotation prevention member to the support portion or the support member.

8. The device of claim 5, wherein while the operation member is positioned within an operation section comprising a range in which the operation member moves, the first inclined surface and the second inclined surface remain at least partially in contact with each other, and the third inclined surface and the fourth inclined surface remain at least partially in contact with each other.

9. The device of claim 1, further comprising:
at least one second elastic member disposed to transfer a restoring force to the first sliding member in a direction opposite to the second direction.

10. The device of claim 1, further comprising:
at least one third elastic member disposed to maintain a position of the operation member with respect to the housing.

11. The device of claim 1, further comprising:
a second sliding member positioned in the second direction with respect to the first sliding member and disposed to move in a direction opposite to the second direction as the operation member moves in the first direction.

12. The apparatus of claim 11, wherein the operation member further comprises a fifth inclined surface formed at one end extending in the first direction at a position different from the first inclined surface, and
wherein the second sliding member comprises a sixth inclined surface adjacent to the fifth inclined surface and slides in the direction opposite to the second direction by a force applied from the fifth inclined surface to the sixth inclined surface as the operation member moves in the first direction.

13. The apparatus of claim 12, wherein the second sliding member further comprises a seventh inclined surface inclined in a direction opposite to the sixth inclined surface, and
wherein the connecting member further comprises an eighth inclined surface adjacent to the seventh inclined surface and is disposed to move in the third direction as the second sliding member slides in the direction opposite to the second direction.

14. The apparatus of claim 1, wherein the at least one rotation prevention member is disposed at a position offset from a central axis about which the device rotates in a state in which when at least a portion of the external device is inserted into the device and rotated.

15. The apparatus of claim 14, wherein the at least one rotation prevention member comprises a first rotation prevention member positioned in a fourth direction from the central axis and a second rotation prevention member positioned in a direction opposite to the fourth direction from the central axis.
